# EUROPÄISCHE PATENTSCHRIFT

(11) **EP 2 595 263 B1**
(45) Veröffentlichungstag und Bekanntmachung des Hinweises auf die Patenterteilung: **30.03.2016**
(21) Anmeldenummer: 11189359.0
(22) Anmeldetag: 16.11.2011
(51) Int. Cl.: H02G 5/06, H02G 5/00, H02B 13/035, H02B 13/045

(54) **Elektrisches Schaltgerät**
Electric switch
Commutateur électrique

(43) Veröffentlichungstag der Anmeldung: 22.05.2013
(73) Patentinhaber: General Electric Technology GmbH, 5400 Baden (CH)
(72) Erfinder: Stelter, Achim, 34128 Kassel (DE); Bierich, Victor, 34346 Hannover-Münden (DE); Reitz, Hilmar, 34281 Gudensberg (DE)
(74) Vertreter: DREISS Patentanwälte PartG mbB

(56) Entgegenhaltungen:
- EP-A1- 0 660 479
- JP-A- 11 273 766
- JP-U- 58 003 717
- JP-U- 60 082 930

## Beschreibung

Die Erfindung betrifft ein elektrisches Schaltgerät nach dem Oberbegriff des Anspruchs 1. Ein derartiges Schaltgerät ist aus der JP 58 003717 U1 bekannt.

Aus der DE 24 09 484 C2 ist ein Teil einer druckgasisolierten elektrischen Schaltanlage bekannt. In der dortigen Figur 4 ist ein Trenner-Baustein 1a dargestellt, der an seinem rechten Ende gasdicht durch einen Stützisolator 9 verschlossen ist. Durch den Stützisolator 9 ist ein Stromleiterstück 7 hindurchgeführt und gehalten, das in Richtung zu dem anderen Ende des Trenner-Bausteins 1a ausgerichtet ist. Die beiden Enden des Stromleiterstücks 7 befinden sich im Bereich der beiden Enden des Trenner-Bausteins 1a. An dem dem Stützisolator 9 gegenüberliegenden Ende des Trenner-Bausteins 1a ist ein rohrförmiges Sammelschienenteil 2a gasdicht angeflanscht, in dem ein weiteres Stromleiterstück 8 untergebracht ist. Die beiden Enden des Stromleiterstücks 8 befinden sich im Bereich der beiden Enden des Sammelschienenteils 2a. An dem entgegengesetzten Ende des Sammelschienenteils 2a ist wieder ein Stützisolator 9 vorhanden, durch den ein weiteres Stromleiterstück 7 hindurchgeführt und gehalten ist.

Durch die erläuterte Ausgestaltung des Trenner-Bausteins 1a und des Sammelschienenteils 2a können diese beiden Bauteile modulartig aneinander angereiht werden. Die beiden Stromleiterstücke 7, 8 sind dabei jeweils über ein Verbindungsteil 10 elektrisch miteinander verbunden. Das Verbindungsteil 10 kann beispielweise gemäß der Figur 3 der DE 24 09 484 C2 ausgebildet sein, also in der Form eines in eine Buchse eintauchenden Steckers. Durch diese Ausgestaltung des Verbindungsteils 10 kann eine thermisch bedingte Längenausdehnung der Stromleiterstücke 7, 8 ausgeglichen werden.

Ein Nachteil der bekannten Schaltanlage besteht darin, dass einem Trenner-Baustein 1a und einem Sammelschienenteil 2a immer zwei Verbindungsteile 10 zugeordnet sind. An diesen beiden Verbindungsteilen 10 bzw. an deren Übergangswiderständen entsteht Verlustenergie in der Form von Wärme, was eine Verminderung des Wirkungsgrads der elektrischen Schaltanlage zur Folge hat.

Aufgabe der Erfindung ist es die Nachteile der bekannten Schaltgeräte und Schaltanlagen zu überwinden.

Die Erfindung löst diese Aufgabe durch ein elektrisches Schaltgerät nach dem Anspruch 1.

Das erfindungsgemäße elektrische Schaltgerät weist zwei Räume auf, in denen ein erstes Leiterstück sowie gegebenenfalls weitere Komponenten des Schaltgeräts untergebracht sind. Es ist ein Stützisolator vorgesehen, der die beiden Räume voneinander trennt, und durch den das erste Leiterstück hindurchgeführt ist. Es ist ein Ring vorhanden, der dem Stützisolator zugeordnet ist, und durch den das erste Leiterstück derart hindurchgeführt ist, dass eine Bewegung des ersten Leiterstücks in dem Ring möglich ist.

Die Erfindung bringt den Vorteil mit sich, dass das erste Leiterstück relativ zu dem Ring und damit auch relativ zu dem Stützisolator beweglich ist. Damit können thermisch bedingte Längenausdehnungen des ersten Leiterstücks im Hinblick auf den Stützisolator ausgeglichen werden. Da über den Ring und den Stützisolator kein Strom fließt, kann dort keine Wärme oder Verlustenergie entstehen. Insoweit kann der Ring auch in einfacher Weise aufgebaut sein, insbesondere ohne die Notwendigkeit von aufwändigen elektrischen Verbindungsmitteln.

Wenn überhaupt, so ist es bei der Erfindung nur noch erforderlich, thermisch bedingte Längenausdehnungen des ersten Leiterstücks zu einem damit verbundenen zweiten Leiterstück auszugleichen. Hierzu können zwar elektrische Verbindungsmittel erforderlich sein, jedoch nicht in zweifacher Ausführung wie beim Stand der Technik, sondern nur einmalig. Dies stellt eine Vereinfachung der gesamten Konstruktion dar und hat auch eine Kostenreduktion zur Folge.

Erfindungsgemäß ist vorgesehen, dass der Stützisolator die beiden Räume gasdicht voneinander trennt, wobei der Ring gasdicht mit dem Stützisolator verbunden ist, und wobei zwischen dem ersten Leiterstück und dem Ring ein Dichtring vorhanden ist. Damit kann in einfacher Weise ein druckgasisoliertes Schaltgerät aufgebaut werden.

Bei einer vorteilhaften Ausgestaltung der Erfindung können die elektrischen Verbindungsmittel dadurch realisiert sein, dass das zweite Leiterstück etwa koaxial und benachbart zu dem ersten Leiterstück angeordnet ist, und dass eines der beiden Leiterstücke an seinem dem anderen Leiterstück zugewandten freien Ende eine Buchse aufweist, in die das freie Ende des anderen Leiterstücks eingesteckt ist. Dabei ist es zweckmäßig, wenn eine Bewegung des anderen Leiterstücks innerhalb der mit dem erstgenannten Leiterstück verbundenen Buchse möglich ist.

Damit ist der erwähnte Ausgleich von Längenausdehnungen in einfacher Weise erreichbar.

Bei vorteilhaften Weiterbildungen der Erfindung ist zwischen dem ersten Leiterstück und dem Ring ein Führungsring vorhanden, und/oder es ist zwischen dem ersten Leiterstück und dem Ring ein Kontaktelement vorhanden. Damit können die Gleit- und Führungseigenschaften und/oder die elektrischen Eigenschaften des Rings im Hinblick auf das erste Leiterstück verbessert werden.

Weitere Merkmale, Anwendungsmöglichkeiten und Vorteile der Erfindung ergeben sich aus der nachfolgenden Beschreibung von Ausführungsbeispielen der Erfindung, die in den Figuren dargestellt sind. Dabei bilden alle beschriebenen oder dargestellten Merkmale für sich oder in beliebiger Kombination den Gegenstand der Erfindung, unabhängig von ihrer Zusammenfassung in den Patentansprüchen oder deren Rückbeziehung sowie unabhängig von ihrer Formulierung bzw. Darstellung in der Beschreibung bzw. in den Figuren.

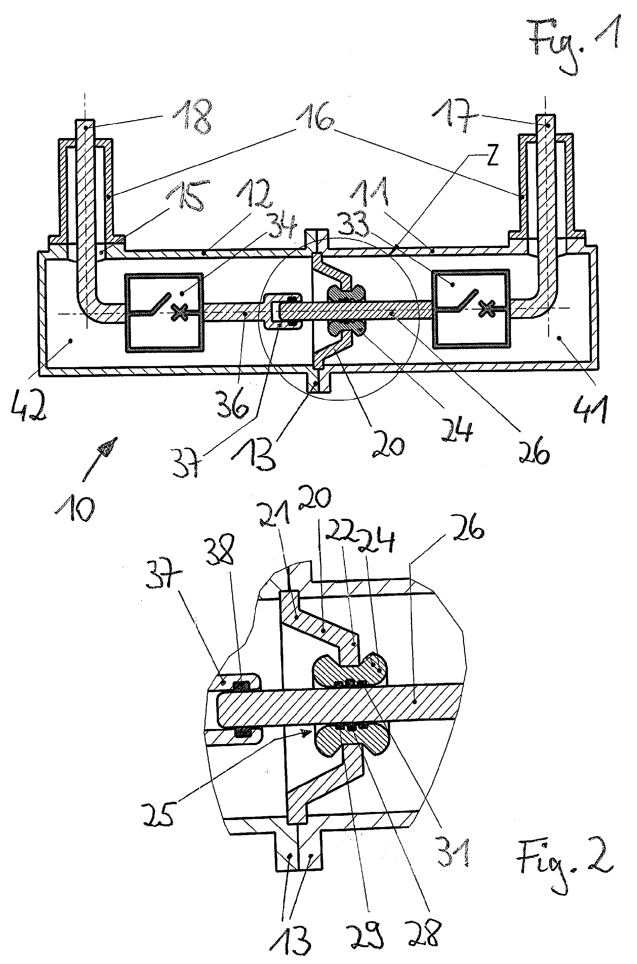

Figur 1 zeigt eine schematische Schnittdarstellung eines Ausführungsbeispiel eines erfindugsgemäßen elektrischen Schaltgeräts, und Figur 2 zeigt einen Ausschnitt Z aus der Figur 1 in einer vergrößerten Darstellung.

In der Figur 1 ist eine Phase eines elektrischen Schaltgeräts 10 dargestellt, das vorzugsweise in Hochspannungsschaltanlagen zum Einsatz kommt. Bei dem Schaltgerät 10 handelt es sich um ein sogenanntes gekapseltes druckgasisoliertes Schaltgerät.

Das Schaltgerät 10 weist ein erstes und ein zweites metallisches Gehäuseteil 11, 12 auf, die jeweils rohrförmig ausgebildet und einseitig verschlossen sind. An ihren offenen Enden sind die beiden Gehäuseteile 11, 12 über Flansche 13 gasdicht miteinander verbunden, beispielsweise verschraubt. Der Innenraum der beiden Gehäuseteile 11, 12 ist mit einem Isoliergas, beispielsweise mit SF6 oder N2 oder einem sonstigen Gas oder Gasgemisch gefüllt. Gegebenenfalls kann der Innenraum der beiden Gehäuseteile 11, 12 auch evakuiert sein, so dass dort ein Vakuum vorhanden ist.

Im Bereich ihrer verschlossenen Enden weisen die beiden Gehäuseteile 11, 12 an ihren Umfangsflächen jeweils eine Öffnung 15 auf, auf die jeweils ein rohrförmiges Isolatorteil 16 gasdicht aufgesetzt ist. Über die beiden Isolatorteile 16 sind ein erster und ein zweiter elektrischer Leiter 17, 18 gasdicht von außen in den Innenraum der beiden Gehäuseteile 11, 12 eingeführt. Die elektrischen Leiter 17, 18 sind aus einem elektrisch leitfähigen Material hergestellt, insbesondere aus einem Metall.

Im Innenraum der beiden Gehäuseteile 11, 12 sind die beiden Leiter 17, 18 derart abgewinkelt, dass sie im Wesentlichen koaxial innerhalb der beiden rohrförmigen Gehäuseteile 11, 12 ausgerichtet sind.

Etwa im Bereich der Flansche 13 ist ein Stützisolator 20 vorhanden, der im Wesentlichen ringförmig ausgestaltet ist. Der Stützisolator 20 besteht aus einem elektrisch isolierenden Material und weist einen Außenrand 21 und einen Innenrand 22 auf. Beispielsweise kann der Stützisolator 20 aus einem Gießharz hergestellt sein, das insbesondere eine Al2O3-Beimischung aufweist. Im vorliegenden Ausführungsbeispiel ist der Stützisolator 20 in der Art eines am Boden offenen Topfes ausgebildet. Der Stützisolator 20 befindet sich im Wesentlichen innerhalb des ersten Gehäuseteils 11 bzw. ragt in das erste Gehäuseteil 11 hinein.

Der Stützisolator 20 ist mit seinem Außenrand 21 gasdicht an einem der beiden oder an beiden Gehäuseteilen 11, 12 befestigt. Beispielsweise ist der Außenrand 21 des Stützisolators 20 zwischen den Flanschen 13 der beiden Gehäuseteile 11, 12 eingeklemmt.

Dem Stützisolator 20 ist ein Ring 24 zugeordnet. Der Ring 24 ist in der von dem Innenrand 22 des Stützisolators 20 gebildeten Öffnung aufgenommen. Der Ring 24 wird von dem Stützisolator 20 gehalten. Der Ring 24 besteht aus einem elektrisch leitfähigen Material. Der Ring 24 weist eine etwa ovale Querschnittsfläche auf und liegt gasdicht an dem Innenrand 22 des Stützisolators 20 an. Von dem Ring 24 wird eine Durchführöffnung 25 gebildet, die im Wesentlichen koaxial zu den beiden Gehäuseteilen 11, 12 ausgerichtet ist.

Der Ring 24 dient der Beeinflussung des elektrischen Feldes innerhalb der beiden Gehäuseteile 11, 12. Unter anderem zu diesem Zweck kann die Querschnittsfläche des Rings 24 auch abweichend zu dem vorliegenden Ausführungsbeispiel ausgebildet sein.

In der Durchführöffnung 25 des Rings 24 ist ein erstes Leiterstück 26 aufgenommen. Das erste Leiterstück 26 besteht aus einem elektrisch leitfähigen Material, beispielsweise aus einem Metall. Das erste Leiterstück 26 ist zumindest teilweise stab- oder rohrförmig ausgebildet und ist mit der auf diese Weise gebildeten Achse im Wesentlichen koaxial innerhalb der beiden Gehäuseteile 11, 12 ausgerichtet. Das erste Leiterstück 26 befindet sich weitgehend innerhalb des ersten Gehäuseteils 11 und ragt nur geringfügig in das zweite Gehäuseteil 12 hinein.

Das erste Leiterstück 26 ist in dem Ring 24 in axialer Richtung zumindest geringfügig hin- und her bewegbar. Hierzu ist zwischen dem Ring 24 und dem ersten Leiterstück 26 zumindest ein geringfügiger Ringspalt vorhanden.

Auf der der Durchführöffnung 25 zugewandten Innenseite des Rings 24 ist ein Dichtring 28 in eine Nut des Rings 24 eingelassen. Der Dichtring 28 ist vorzugsweise aus einem Elastomer oder dergleichen, vorzugsweise aus Gummi hergestellt. Der vorgenannte Ringspalt zwischen dem Ring 24 und dem ersten Leiterstück 26 wird von dem Dichtring 28 geschlossen. Mit Hilfe des Dichtrings 28 ergibt sich eine gasdichte Verbindung zwischen dem Ring 24 und dem ersten Leiterstück 26.

Auf der Innenseite des Rings 24 kann weiterhin ein Führungsring 29 in eine Nut eingelassen sein. Der Führungsring 29 kann beispielsweise aus einem Metall oder aus einem Polymerwerkstoff hergestellt sein. Sofern vorhanden, dann ist der Führungsring 29 dazu vorgesehen, die Gleitbedingungen zwischen dem Ring 24 und dem ersten Leiterstück 26 zu verbessern. Weiterhin kann der Führungsring 29 auch der Zentrierung des ersten Leiterstücks 26 innerhalb des Rings 24 dienen und/oder die Abdichtung zwischen dem Ring 24 und dem ersten Leiterstück 26 verbessern.

Gegebenenfalls kann der Ring 24 auch aus einem Material mit guten Gleiteigenschaften bestehen, beispielsweise aus PTFE (Polytetraflurethylen). In diesem Fall beeinflusst das Material des Rings 24 das Gleit- und Führungsverhalten des ersten Leiterstücks 26. In diesem Fall kann der Führungsring 29 unter Umständen entfallen.

Gegebenenfalls können der Stützisolator 20 und der Ring 24 auch einstückig ausgebildet sein. In diesem Fall besteht das gemeinsame Stützer-Bauteil aus einem isolierenden Material, beispielsweise aus einem Gießharz. Der Dichtring 28 und/oder der Führungsring 29 können dann in das Gießharz dieses gemeinsamen Stützer-Bauteils eingelassen sein.

Insbesondere wenn der Ring 24 aus einem leitfähigen Material hergestellt ist, beispielsweise aus einem Metall, dann kann auf der Innenseite des Rings weiterhin ein Kontaktelement 31 in eine Nut eingelassen sein. Das Kontaktelement 31 kann ringförmig oder lamellenartig ausgebildet sein. Sofern vorhanden, so besteht das Kontaktelement 31 aus einem elektrisch leitfähigen Material. Wenn vorhanden, dann ist das Kontaktelement 31 dazu vorgesehen, eine elektrische Verbindung zwischen dem Ring 24 und dem ersten Leiterstück 26 herzustellen. Durch diese elektrische Verbindung können Potentialunterschiede zwischen den beiden genannten Bauteilen vermieden werden, ohne dass dabei wesentliche Ströme über das Kontaktelement 31 fließen.

Innerhalb des ersten Gehäuseteils 11 ist in dem vorliegenden Ausführungsbeispiel ein erster Leistungsschalter 33 untergebracht. Ein Anschluss des ersten Leistungsschalters 33 ist mit dem ersten Leiter 17 und der andere Anschluss ist mit dem ersten Leiterstück 26 verbunden.

Innerhalb des zweiten Gehäuseteils 12 ist in dem vorliegenden Ausführungsbeispiel ein zweiter Leistungsschalter 34 untergebracht. Ein Anschluss des zweiten Leistungsschalters 34 ist mit dem zweiten Leiter 18 und der andere Anschluss ist mit einem zweiten Leiterstück 36 verbunden.

Es wird darauf hingewiesen, dass anstelle des ersten Leistungsschalters 33 und/oder des zweiten Leistungsschalters 34 auch andere Komponenten des Schaltgeräts 10 vorhanden sein können, beispielsweise Trenner-Schalter oder Trenner/Erder-Schalter oder dergleichen. Ebenfalls ist es möglich, dass einer der beiden Schalter oder beide Schalter nicht vorhanden ist/sind, und dass statt dessen der erste Leiter 17 und das erste Leiterstück 26 und/oder der zweite Leiter 18 und das zweite Leiterstück 36 direkt miteinander verbunden bzw. einstückig ausgebildet sind. Mit der zuletzt genannten Alternative können räumliche Entfernungen überwunden werden.

Das zweite Leiterstück 36 ist stab- oder rohrförmig ausgebildet und im Wesentlichen koaxial innerhalb der beiden Gehäuseteile 11, 12 ausgerichtet. Das zweite Leiterstück 36 besteht aus einem elektrisch leitfähigen Material und befindet sich innerhalb des zweiten Gehäuseteils 12. Das erste und das zweite Leiterstück 26, 36 sind koaxial zueinander ausgerichtet und ihre freien Enden sind benachbart zueinander angeordnet.

An seinem dem ersten Leiterstück 26 zugewandten freien Ende weist das zweite Leiterstück 36 eine Buchse 37 auf, die dazu vorgesehen ist, das freie Ende des ersten Leiterstücks 26 darin aufzunehmen. Die Abmessungen der Buchse 37 in axialer Richtung sind dabei derart vorgesehen, dass sich das erste Leiterstück 26 zumindest geringfügig in axialer Richtung innerhalb der Buchse 37 hin- und her bewegen kann.

Innerhalb der Buchse 37 sind elektrische Verbindungsmittel 38 vorhanden, die dazu geeignet sind, eine elektrische Verbindung mit einem geringen Übergangswiderstand zwischen den beiden Leiterstücken 26, 36 herzustellen. Bei den elektrischen Verbindungsmitteln 38 kann es sich beispielsweise um federbelastete Kontakte oder dergleichen handeln.

Es versteht sich, dass die freien Enden der beiden Leiterstücke 26, 36 auch andersartig ausgestaltet sein können. In dieser Hinsicht ist nur wesentlich, dass einerseits eine zumindest geringfügige axiale Relativbewegung zwischen den beiden Leiterstücken 26, 36 möglich ist, und dass andererseits eine elektrische Verbindung mit einem geringen Übergangswiderstand zwischen den beiden Leiterstücken 26, 36 erreichbar ist.

Der erste Leiter 17, der erste Leistungsschalter 33 und das erste Leiterstück 26 befinden sich in einem ersten gasdicht verschlossenen Raum 41, der im Wesentlichen von dem ersten Gehäuseteil 11 begrenzt ist. Der zweite Leiter 18, der zweite Leistungsschalter 34 und das zweite Leiterstück 36 befinden sich in einem zweiten gasdicht verschlossenen Raum 42, der im Wesentlichen von dem zweiten Gehäuseteil 12 begrenzt ist. Die beiden Räume 41, 42 sind durch den Stützisolator 20 gasdicht voneinander getrennt.

Bei geschlossenen Leistungsschaltern 33, 34 kann ein Strom von dem ersten Leiter 17 zu dem zweiten Leiter 18 oder umgekehrt fließen. Die beiden Leiter 17, 18 sowie die beiden Leiterstücke 26, 36 sind dabei mit Hilfe der Isolatorteile 16, des Stützisolators 20 sowie dem vorhandenen Isoliergas von den beiden Gehäuseteilen 11, 12 elektrisch isoliert. Die beiden Gehäuseteile 11, 12 sind üblicherweise geerdet.

Im Betrieb des Schaltgeräts 10 gegebenenfalls auftretende thermisch bedingte Längenausdehnungen insbesondere von einem der beiden oder von beiden Leiterstücken 26, 36 und/oder von einem der beiden oder von beiden Leitern 17, 18 werden dadurch kompensiert, dass einerseits sich das erste Leiterstück 26 - wie erläutert wurde - innerhalb der mit dem zweiten Leiterstück 36 verbundenen Buchse 37 in axialer Richtung zumindest geringfügig hin- und her bewegen kann, und dass andererseits - wie ebenfalls erläutert wurde - sich das erste Leiterstück 26 auch innerhalb des mit dem Stützisolator 20 verbundenen Rings 24 zumindest geringfügig hin- und her bewegen kann.

Durch die erläuterten Möglichkeiten, dass sich das erste Leiterstück 26 und die Buchse 37 des zweiten Leiterstücks 36 einerseits sowie das erste Leiterstück 26 und der Ring 24 des Stützisolators 20 andererseits jeweils relativ zueinander verschieben können, können auch fertigungsbedingte Toleranzen ausgeglichen werden.

Die beiden Gehäuseteile 11, 12 mit den darin untergebrachten Bauteilen können jeweils separat hergestellt werden. Ebenfalls können der Stützisolator 20 und der Ring 24 separat hergestellt werden. Dabei kann der Stützisolator 20 beispielsweise aus einem Gießharz gegossen und der Ring 24 bei der Herstellung des Stützisolators 20 mit eingegossen werden, oder es kann der Stützisolator 20 und/oder der Ring 24 derart ausgebildet sein, dass der Ring 24 auf den fertig gegossenen Stützisolator 20 aufsteckbar ist.

Die beiden montierten Gehäuseteile 11, 12 können unter Zwischenschaltung des Stützisolators 20 zusammengefügt werden. Bei diesem Zusammenfügen kann das erste Leiterstück 26 in die Buchse 37 des zweiten Leiterstücks 36 eingesteckt werden. Über die Flansche 13 können die beiden Gehäuseteile 11, 12 fest miteinander und mit dem Stützisolator 20 verbunden werden.

Über nicht-dargestellte Öffnungen in den beiden Gehäuseteilen 11, 12 können die beiden Räume 41, 42 mit Isoliergas befüllt werden. Es versteht sich, dass es auch möglich ist, anstelle des Isoliergases die Gehäuseteile 11, 12 zu evakuieren und damit ein Vakuum in den beiden Räumen 41, 42 herzustellen.

Wie eingangs erläutert, ist das Schaltgerät 10 der Figur 1 einphasig ausgebildet. Es versteht sich, dass in entsprechender Weise auch mehrphasige Geräte aufgebaut werden können. Das Schaltgerät 10 kann auf einem Montagerahmen im Freien aufgestellt sein und kann dort ein Bestandteil einer Hochspannungsschaltanlage bilden.

Es wird darauf hingewiesen, dass auch mehrere Dichtringe 28 und/oder mehrere Führungsringe 29 und/oder mehrere Kontaktelemente 31 vorhanden sein können. Ebenfalls ist es möglich, dass der/die Dichtring/e 28 und/oder der/die Führungsring/e 29 und/oder der/die Kontaktelement/e 31 nicht - wie anhand der Figuren erläutert - in der Innenseite des Rings 24 eingelassen sind, sondern auf der Außenseite des ersten Leiterstücks 26, und zwar dort im Bereich des Rings 24.

Weiterhin wird darauf hingewiesen, dass die Buchse 37 nicht - wie anhand der Figuren erläutert - an dem zweiten Leiterstück 36 angebracht sein muss, sondern auch an dem freien Ende des ersten Leiterstücks 26 angebracht sein kann. In diesem Fall taucht das freie Ende des zweiten Leiterstücks 36 in die Buchse 37 des ersten Leiterstücks 26 ein.

Ebenfalls wird darauf hingewiesen, dass das elektrische Schaltgerät 10 der Figuren 1 und 2 auch noch weitere Gehäuseteile und/oder Räume aufweisen kann, in denen andere und/oder weitere Komponenten des Schaltgeräts 10 untergebracht sind bzw. in denen andere und/oder weitere Funktionen des Schaltgeräts 10 ausgeführt werden.

## Patentansprüche

1. Elektrisches Schaltgerät (10) insbesondere für eine gasisolierte elektrische Schaltanlage, mit zwei Räumen (41, 42), in denen ein erstes Leiterstück (26) sowie gegebenenfalls weitere Komponenten des Schaltgeräts (10) untergebracht sind, und mit einem Stützisolator (20), der die beiden Räume (41, 42) voneinander trennt, und durch den das erste Leiterstück (26) hindurchgeführt ist, wobei ein Ring (24) vorhanden ist, der dem Stützisolator (20) zugeordnet ist, und durch den das erste Leiterstück (26) derart hindurchgeführt ist, dass eine Bewegung des ersten Leiterstücks (26) in dem Ring (24) möglich ist, **dadurch gekennzeichnet, dass** der Stützisolator (20) die beiden Räume (41, 42) gasdicht voneinander trennt, wobei der Ring (24) gasdicht mit dem Stützisolator (20) verbunden ist, und wobei zwischen dem ersten Leiterstück (26) und dem Ring (24) mindestens ein Dichtring (28) vorhanden ist.

2. Elektrisches Schaltgerät (10) nach Anspruch 1, wobei das erste Leiterstück (26) zumindest teilweise stab- oder rohrförmig ausgebildet ist, und wobei die Bewegung in Richtung der von der stab- oder rohrförmigen Ausbildung des ersten Leiterstücks (26) vorgegebenen Achse möglich ist.

3. Elektrisches Schaltgerät (10) nach einem der vorstehenden Ansprüche, wobei zwischen dem ersten Leiterstück (26) und dem Ring (24) mindestens ein Führungsring (29) vorhanden ist.

4. Elektrisches Schaltgerät (10) nach einem der Ansprüche 1 bis 3, wobei der Ring (24) aus einem elektrisch leitfähigen Material, insbesondere aus einem Metall besteht, und wobei der Ring (24) von dem Stützisolator (20) gehalten ist.

5. Elektrisches Schaltgerät (10) nach Anspruch 4, wobei zwischen dem ersten Leiterstück (26) und dem Ring (24) mindestens ein Kontaktelement (31) vorhanden ist.

6. Elektrisches Schaltgerät (10) nach einem der Ansprüche 1 bis 3, wobei der Ring (24) und der Stützisolator (20) einstückig ausgebildet sind.

7. Elektrisches Schaltgerät (10) nach einem der vorstehenden Ansprüche, wobei der Stützisolator (20) ringförmig ausgebildet ist, und wobei der Ring (24) in der von dem Stützisolator (20) gebildeten Öffnung angeordnet ist.

8. Elektrisches Schaltgerät (10) nach einem der vorstehenden Ansprüche, wobei ein zweites Leiterstück (36) vorhanden ist, das etwa koaxial und benachbart zu dem ersten Leiterstück (26) angeordnet ist, und wobei eines der beiden Leiterstücke (36) an seinem dem anderen Leiterstück (26) zugewandten freien Ende eine Buchse (37) aufweist, in die das freie Ende des anderen Leiterstücks (26) eingesteckt ist.

9. Elektrisches Schaltgerät (10) nach Anspruch 8, wobei eine Bewegung des anderen Leiterstücks (26) innerhalb der mit dem erstgenannten Leiterstück (36) verbundenen Buchse (37) möglich ist.

10. Elektrisches Schaltgerät (10) nach Anspruch 9, wobei die Buchse (37) derart ausgebildet ist, dass die Bewegung in axialer Richtung möglich ist.

11. Elektrisches Schaltgerät (10) nach einem der Ansprüche 8 bis 10, wobei in der Buchse (37) elektrische Verbindungsmittel (38) vorgesehen sind, insbesondere federbelastete metallische Kontakte.

12. Elektrische Schaltanlage, **gekennzeichnet durch** ein elektrisches Schaltgerät (10) nach einem der vorstehenden Ansprüche.

## Claims

1. Electrical switching device (10), particularly for a gas-insulated electrical switchgear, with two chambers (41, 42), wherein a first conductor-piece (26) and, if required, more components of the switching device (10) are placed, and with a pin insulator (20), which separates both the chambers (41, 42) from each other, and through which the first conductor-piece (26) is passed, wherein a ring (24) is present, which is assigned to the pin-insulator (20), and through which the first conductor-piece (26) is fed in such a way, that movement of the first conductor-piece (26) is possible in the ring (24), **characterized in that** the pin insulator (20) divides both the chambers (41, 42) gas-tight from each other, wherein the ring (24) is connected gas-tight to the pin insulator, and wherein there is at least one sealing ring (28) between the first conductor-piece (26) and the ring (24).

2. Electrical switching device (10) according to claim 1, wherein the first conductor-piece (26) is, at least in parts, rod-like or tubular in shape, and wherein movement is possible in the direction of the axis formed by the rod-like or tubular shape of the first conductor-piece (26).

3. Electrical switching device (10) according to one of the above mentioned claims, wherein there is at least one guide ring (29) present between the first conductor piece (26) and the ring (24).

4. Electrical switching device (10) according to one of the claims 1 to 3, wherein the ring (24) consists of an electrically conductive material, especially a metal, and wherein the ring (24) is held by the pin insulator (20).

5. Electrical switching device (10) according to claim 4, wherein there is at least one contact element (31) present between the first conductor-piece (26) and the ring (24).

6. Electrical switching device (10) according to one of the claims 1 to 3, wherein the ring (24) and the pin insulator (20) are designed as one piece.

7. Electrical switching device (10) according to one of the above mentioned claims, wherein the pin insulator (20) is toroidal in shape and wherein the ring (24) is arranged in the opening formed by the pin insulator (20).

8. Electrical switching device (10) according to one of the above mentioned claims, wherein there is a second conductor-piece (36) arranged roughly coaxially and adjacent to the first conductor-piece (26), and wherein one of the two conductor-pieces (36) features, at its free end facing the other conductor-piece (26), a socket (37) in which the free end of the other conductor-piece (26) is inserted.

9. Electrical switching device (10) according to claim 8, wherein movement of the other conductor-piece (26) is possible within the socket connected to the former conductor piece (36).

10. Electrical switching device (10) according to claim 9, wherein the socket (37) is shaped in such way that movement is possible in axial direction.

11. Electrical switching device (10) according to one of the claims 8 to 10, with electrical connecting means (38) provided in the socket (37), particularly spring-loaded metallic contacts.

12. Electrical switchgear, **characterized by** an electrical switching device (10) according to one of the above mentioned claims.

## Revendications

1. Commutateur électrique (10), en particulier pour une installation de commutation électrique isolée au gaz, comprenant deux espaces (41, 42), dans lesquels sont installés un premier élément conducteur (26) et, le cas échéant, d'autres composants du commutateur électrique (10) et comprenant un support isolant (20) qui sépare les deux espaces (41, 42) et à travers lequel passe le premier élément conducteur (26), une bague (24) étant présente et associée au support isolant (20) et à travers laquelle le premier élément conducteur (26) passe de sorte qu'un mouvement du premier élément conducteur (26) dans la bague (24) est possible, **caractérisé en ce que** le support isolant (20) sépare de façon étanche aux gaz les deux espaces (41, 42), la bague (24) étant reliée de façon étanche aux gaz au support isolant (20) et au moins une bague d'étanchéité (28) étant installée entre le premier élément conducteur (26) et la bague (24).

2. Commutateur électrique (10) selon la revendication 1, dans lequel le premier élément conducteur (26) est réalisé au moins partiellement sous la forme d'une tige ou d'un tube, et dans lequel le mouvement dudit premier élément conducteur (26), en direction de l'axe défini par la réalisation en forme de tige ou tube du premier élément conducteur (26), est possible.

3. Commutateur électrique (10) selon l'une des revendications précédentes, dans lequel au moins une bague de guidage (29) est installée entre le premier élément conducteur (26) et la bague (24).

4. Commutateur électrique (10) selon l'une des revendications 1 à 3, dans lequel la bague (24) est constituée d'un matériau électriquement conducteur, en particulier un métal, et dans lequel la bague (24) est maintenue par le support isolant (20).

5. Commutateur électrique (10) selon la revendication 4, dans lequel au moins un élément de contact (31) est présent entre le premier élément conducteur (26) et la bague (24).

6. Commutateur électrique (10) selon l'une des revendications 1 à 3, dans lequel la bague (24) et le support isolant (20) sont réalisés d'un seul tenant.

7. Commutateur électrique (10) selon l'une des revendications précédentes, dans lequel le support isolant (20) est réalisé de forme annulaire, et dans lequel la bague (24) est agencée dans l'ouverture formée par le support isolant (20).

8. Commutateur électrique (10) selon l'une des revendications précédentes, dans lequel un second élément conducteur (36) est agencé de façon sensiblement coaxiale et adjacente au premier élément conducteur (26), et dans lequel un des deux éléments conducteurs (36) présente au niveau de son extrémité libre orientée vers l'autre élément conducteur (26) une douille (37) dans laquelle vient s'enficher l'extrémité libre de l'autre élément conducteur (26).

9. Commutateur électrique (10) selon la revendication 8, dans lequel un mouvement de l'autre élément conducteur (26) à l'intérieur de la douille (37) raccordée audit second élément conducteur (36) est possible.

10. Commutateur électrique (10) selon la revendication 9, dans lequel la douille (37) est réalisée de sorte que le mouvement dans le sens axial est possible.

11. Commutateur électrique (10) selon l'une des revendications 8 à 10, dans lequel il est prévu dans la douille (37) des moyens de raccordement électriques (38), en particulier des contacts métalliques à ressort.

12. Installation de commutation électrique **caractérisée par** un commutateur électrique (10) selon l'une des revendications précédentes.
